## Europäisches Patentamt
## European Patent Office
## Office européen des brevets

(19)

(11) Veröffentlichungsnummer: **0 175 638 B1**

(12)

# EUROPÄISCHE PATENTSCHRIFT

(45) Veröffentlichungstag der Patentschrift:
08.11.89

(21) Anmeldenummer: 85730113.9

(22) Anmeldetag: 27.08.85

(51) Int. Cl.⁴: **H01B 3/30, H01B 3/40,**
**C08G 18/00, C08G 18/04**

(54) Heisshärtende Reaktionsharzmischung zur Imprägnierung von Isolierungen elektrischer Geräte und zur Herstellung von Formstoffen mit und ohne Einlagen.

(30) Priorität: 14.09.84 DE 3434270

(43) Veröffentlichungstag der Anmeldung:
26.03.86 Patentblatt 86/13

(45) Bekanntmachung des Hinweises auf die Patenterteilung:
08.11.89 Patentblatt 89/45

(84) Benannte Vertragsstaaten:
AT BE CH DE FR GB IT LI NL SE

(56) Entgegenhaltungen:
EP-A- 0 035 072
DE-A- 2 655 367
US-A- 4 224 422

(73) Patentinhaber: Siemens Aktiengesellschaft,
Wittelsbacherplatz 2, D-8000 München 2(DE)

(72) Erfinder: Rogler, Wolfgang, Dr. rer. nat.,
Frankenstrasse 44, D-8521 Möhrendorf(DE)
Erfinder: Ihlein, Walter, Dr. rer. nat.,
Glockenturmstrasse 36, D-1000 Berlin 19 (DE)

ACTORUM AG

## Beschreibung

Die Erfindung bezieht sich auf eine heißhärtende Reaktionsharzmischung zur Imprägnierung von Isolierungen elektrischer Geräte, gebildet von aus folien- oder bandförmigen Isoliermaterialien hergestellten Isolierhülsen elektrischer Leiter, insbesondere von Wicklungsstäben oder Spulen elektrischer Maschinen, und zur Herstellung von Formstoffen mit oder ohne Einlagen, bestehend aus Polyisocyanaten und (Poly)Epoxidharzen, denen man mindestens eine olefinisch ungesättigte Verbindung, die keine aktiven Wasserstoffatome enthält, und zwar Styrol oder $C_1$–$C_4$ Alkylstyrole oder (Meth)Acrylsäure $C_1$–$C_8$ Alkylester oder Diallylphthalat oder Di-(Meth)Acrylsäureester oder Gemische dieser Verbindungen zugibt, und die ein Beschleunigersystem (Katalysator) enthalten.

Derartige heißhärtende Reaktionsharzmischungen sind aus der DE-A 2 432 952, DE-A 2 308 802 und insbesondere der DE-A 2 722 400 bekannt. Bei diesen Mischungen aus Polyisocyanaten, Epoxidharz und ungesättigter olefinischer Verbindung beträgt der Anteil der letzteren 2 bis 50% bezogen auf die Polyisocyanatkomponente. Durch die Vernetzung dieser Mischungen in Gegenwart bestimmter Beschleunigersysteme können Formstoffe mit hoher Wärmebeständigkeit und Dauerwärmebeständigkeit hergestellt werden sowie mit guten mechanischen und elektrischen Eigenschaften. Die in diesen Druckschriften genannten bekannten Beschleuniger bzw. Beschleunigersysteme, die insbesondere auf die Trimerisierung von Isocyanatgruppen den beschleunigenden Einfluß ausüben, bewirken jedoch in den vorliegenden Mischreaktionssystemen, bei denen neben der Polyaddition auch Polymerisation auftritt, entweder eine zu rasche oder zu langsame Härtung der Mischung, so daß der technische Einsatz dieser Reaktionsharzmischungen zur Imprägnierung von Isolierungen elektrischer Geräte oder zur Herstellung von Formstoffen auf Schwierigkeiten stößt. Bei einer zu raschen Härtung der Mischungen kann für das Imprägnieren keine Viskositätsstabilität erreicht werden, so daß eine vollständige Durchtränkung nicht mehr gewährleistet ist, oder bei trägeren Beschleunigersystemen dauert die Aushärtung zu lange, was für das Gießen von Formstoffen unwirtschaftliche Zeiten der Formbelegung und für das Imprägnieren bei der Aushärtung ein Auslaufen des Imprägnierharzes aus der Isolierhülse zur Folge hat.

Weiterhin ist aus der EP-A 35 072 eine heißhärtende Reaktionsharzmischung aus Polyisocyanaten und Polyepoxidharzen bekannt, die als Beschleuniger Additionskomplexe von tertiären Aminen und Bortrichlorid der allgemeinen Formel $BCl_3 \cdot NR_1R_2R_3$ enthält. Ferner ist dieser bekannten Reaktionsharzmischung als Vernetzungsmittel eine olefinisch ungesättigte Verbindung, nämlich Triallylcyanurat (TAC) zugefügt. Dieses ist in Gewichtsprozenten im Bereich 0,5 bis 10 Gewichtsprozent vorgesehen. Triallylcyanurat hat eine Struktur mit drei endständigen Olefingruppen. Bei der Vernetzung nimmt, wie bereits aus der Literatur bekannt, die dritte Allylgruppe des TAC nicht an der Reaktion teil (siehe z.B. den Aufsatz "Vernetzung von Polyolefinen in Gegenwart neuer s-Triazine" von Ahne, Wiedenmann und Kleeberg in "Kautschuk + Gummi, Kunststoffe", 1975, Seiten 135 bis 140). Die dritte Gruppe ist im fertigen Formstoff vielmehr noch nachweisbar und führt insbesondere bei hohen TAC-Anteilen zu einer verminderten Stabilität des Polyolefins gegenüber thermooxidativem Abbau, d.h. zu einer Versprödung. Ist dagegen der TAC Anteil gering, z.B. 1%, so ist dies für das Reaktionsgeschehen bei der Aushärtung ohne Bedeutung und die Reaktion läuft chemisch so ab, als wäre dieser geringe Anteil an olefinisch ungesättigter Verbindung (TAC) überhaupt nicht vorhanden. Es findet dann eine reine Polyadditionshärtung statt. Demzufolge ergeben sich auch für das ausgehärtete Endprodukt nur Eigenschaften, die einer ausgehärteten Polyisocyanat-Epoxidharzmischung entsprechen, bei der mit der Aushärtung nur eine Bildung von vernetzten Ringstrukturen und linearen Strukturen entsteht.

Um Formstoffe mit hoher Wärmeformbeständigkeit und Dauerwärmebeständigkeit, sowie mit guten mechanischen und elektrischen Eigenschaften zu erhalten, werden bei einer heißhärtenden Reaktionsharzmischung zur Imprägnierung elektrischer Leiter der eingangs genannten Art und zur Herstellung von Formstoffen mit oder ohne Einlagen, bestehend aus Polyisocyanat, (Poly)-Epoxid und mindestens einer olefinischen ungesättigten Verbindung, die keine aktive Wasserstoffatome enthält, gemäß der Erfindung als Beschleunigersysteme Additionskomplexe von tertiären Aminen und Bortrichlorid mit der allgemeinen Formel

$$BCl_3 \cdot NR_1R_2R_3$$

verwendet, wobei $R_1$, $R_2$ und $R_3$ gleiche oder verschiedene aliphatische, aromatische, heterocyclische oder arylaliphatische Reste bedeuten und diese Reste oder zwei davon außer an das tertiäre Aminstickstoffatom auch aneinander gebunden sein können; weiterhin kann das tertiäre Stickstoffatom in ein Ringsystem eingebaut sein, welches auch Mehrfachverbindungen enthalten und einen aromatischen Charakter haben kann, wobei dann $R_1$, $R_2$, $R_3$ für einen dreiwertigen organischen Rest steht, der über eine C-Einfach- und eine C-Doppelverbindung mit dem Stickstoff verbunden ist.

Diese Beschleunigersysteme weisen in der Reaktionsharzmischung aus Polyisocyanat-(Poly)-Epoxidharz und mindestens einer olefinisch ungesättigten Verbindung, wie Styrol oder $C_1$–$C_4$ Alkylstyrol oder (Meth)Acrylsäure $C_1$–$C_8$ Alkylester oder Diallylphthalat oder Di-(Meth)Acrylsäureester oder Gemische dieser Verbindungen, eine ausgeprägte Latenz auf, d.h. die Reaktionsharzmischung kann bei Raumtemperatur wochenlang gelagert werden, ohne daß sich ihre sehr niedrigen Viskositätswerte erhöhen. Bei Auswahl geeigneter Komponenten kann man die Imprägnierung von Isolierhülsen auch bei Raumtemperatur durchführen, wobei eine gute Durchtränkung gewährleistet ist. Ebenso lassen sich Formkörper mit oder ohne Einlagen bei Raumtemperatur gießen. Das Angelieren des eingedrungenen Reaktionsharzsystems geschieht bei Temperaturen von 70 bis 140 °C in wirtschaftlich kurzer Zeit entweder außerhalb des Tränkbades oder innerhalb desselben mittels Stromheizung, auch eine vollkommene Aushärtung mittels Stromheizung ist denkbar. Dadurch können die getränkten bzw. gegossenen Objekte in jeder beliebigen Lage gegebenenfalls zur endgültigen Aushärtung in Öfen gebracht werden, ohne daß ein Ausfließen der eingedrungenen Reaktionsharzmischung zu befürchten ist. Ausgehärtet ergibt diese Reaktionsharzmischung eine Isolierung bzw. Formstoffe hoher Wärmeformbeständigkeit und hoher Dauerwärmefestigkeit, die bei hohen Betriebstemperaturen eingesetzt werden können.

Durch Zusatz von Polymerisationsinhibitoren, wie z. B. Chinhydron, Hydrochinon und Hydrochinonmonomethyläther kann die Lagerstabilität der Mischungen nochmals gesteigert werden, ohne daß sich die Gelierzeiten des Systems bei höheren Temperaturen merklich verlängern.

Es ist zwar die latente Beschleunigerwirkung der Bortrichloridaddukte (BCl₃-Addukte) ähnlich wie diejenige der entsprechenden Bortrifluoridaddukte (BF₃-Addukte) bei Epoxydharzen bzw. Epoxydharzhärtersystemen, sowie die latente Beschleunigerwirkung der BCl₃-Addukte für Isocyanatepoxydsysteme (DE-PS 2655367) bekannt, doch war es nicht naheliegend, daß die BCl₃-Amin-Komplexe auch für Mischungen aus Polyisocyanat-(Poly)-Epoxyd und einer olefinen ungesättigten Verbindung, die keine aktiven Wasserstoffatome enthält, geeignet sind, bzw. daß die latente Wirkung da sogar noch stärker ausgeprägt ist. Dies war um so überraschen der, als die entsprechenden BF₃-Aminkomplexe diese Eigenschaft für das System Isocyanat-Epoxyd-olefinisch ungesättigte Verbindungen, die keine aktiven Wasserstoffe enthält, nicht aufweisen und dafür in die Reihe der gebräuchlichen aminischen Beschleuniger eingeordnet werden müssen.

In überraschender Weise wird außerdem durch den Zusatz der olefinisch ungesättigten Verbindungen ohne aktive Wasserstoffatome die Dauerwärmebeständigkeit erhöht, so daß für die aus der Reaktionsharzmischung hergestellten Isolierstoffe und Formstoffe eine weitere Erhöhung der Betriebstemperatur möglich ist.

Die gute Lagerfähigkeit der Reaktionsharzmischung wird erreicht, wenn in der Reaktionsharzmischung 0,01 bis 5 Gewichtsprozent an Beschleuniger, bezogen auf die Mischung aus Polyisocyanat-(Poly)Epoxyd- olefinisch ungesättigte Verbindungen (ohne aktive Wasserstoffe), enthalten sind. Für den gegebenenfalls zugesetzten Polymerisationsinhibitor beträgt der Zusatz 0,0001 bis 2 Gewichtsprozent. Vorzugsweise wird man 0,05 bis 2,5 Gewichtsprozent für den Beschleuniger und für den Inhibitor 0,01 bis 0,05 Gewichtsprozent wählen, um ein störungsfreies Gelieren bei den höheren Temperaturen zu erreichen.

Um die Wärmealterung der mit der Reaktionsharzmischung gemäß der Erfindung imprägnierten Isolierung gering zu halten, empfiehlt es sich, in der Reaktionsharzmischung die Anteile der (Poly)Epoxydverbindung geringer zu halten als die Anteile der olefinisch ungesättigten Verbindung, die keine aktiven Wasserstoffatome enthält. Weiterhin ist es vorteilhaft, daß in der Reaktionsharzmischung als Polyisocyanate bei Raumtemperatur flüssige Verbindungen verwendet werden, da diese für Tränkungen bei Raumtemperatur besser zu handhaben sind. Dazu sind Isocyanatgemische des Diphenylmethandiisocyanates oder des Toluylendiisocyanates oder Isophorondiisocyanates geeignet.

Bei den für die Reaktionsharzmischung verwendeten Stoffen ist jeweils auf die Reinheit zu achten, da eine Katalyse der Mischung Isocyanat-Epoxyd-olefinisch ungesättigten Verbindung (ohne aktive Wasserstoffatome) ausschließlich dem eingesetzten Beschleunigersystem vorbehalten sein muß, denn nur so zeigen die angegebenen Mischung die ausgezeichnete Stabilität.

Als Epoxyde können Epoxyde, wie
Bisphenol-A-Diglycidyläther
Bisphenol-F-Diglycidyläther
Resorcin-Diglycidyläther,
die bekannten cycloaliphatischen Epoxyde, z. B. das 3,4-Epoxycyclohexylmethyl-3,4-epoxycyclohexancarboxylat, sowie heterocyclische Epoxydverbindungen auf Hydantoinbasis, sowie monofunktionelle Epoxyde, wie Phenylglycidyläther, O-Kresylglycidäther, Glycidäther usw. verwendet werden. Weitere Epoxyde sind dem "Handbook of Epoxy Resin" von H. Lee und K. Neville (Mc. CRAW Hill Book Company, 1967) aufgeführt. Besonders vorteilhaft ist die Verwendung von sehr reinem Bisphenol-A-Diglycidyläther oder sehr reinem Bisphenol-F-Diglycidyläther.

Bei den olefinischen ungesättigten Verbindungen handelt es sich um solche, die keine gegenüber den NCO-Gruppen des Isocyanats reaktiven Wasserstoffatome aufweisen, wie Styrol, $C_1$-$C_4$ Alkylstyrole, (Meth)Acrylsäure $C_1$-$C_8$ Alkylester, Diallylphthalat oder Di(Meth)Acrylsäureester. Beliebige Gemische dieser Verbindungen können ebenfalls eingesetzt werden. Vorzugsweise wurde Styrol und/oder (Meth)Acrylsäurealkylester verwendet.

Die gemäß der Erfindung als Beschleunigersysteme geeigneten Reaktionskomplexe von tertiären Aminen und Bortrichlorid können jeweils noch unterschiedliche Eigenschaften aufwei sen, welche unter bestimmten Bedingungen die Wahl des einen Stoffes gegenüber dem anderen nahelegen. Bewährte Beschleuniger sind Additionskomplexe des Bortrichlorid mit tertiären Aminen, bei denen $R_1$ und $R_2$ aus identischen Resten bestehen, vorzugsweise aus Methylgruppen und $R_3$ ein Alkyl-, Aralkyl-, Aryl- oder heterocyclischer Rest ist. Auch Komplexe des Pyridins oder 1 substituierter Imidazole sind besonders geeignet. Additionskomplexe des Bortrichlorids mit Dimethyloctylamin haben den Vorteil, daß sie leicht in den beanspruchten Mischungen löslich sind. Die Additionskomplexe des Bortrichlorid mit Benzyldimethylamin sind zwar etwas schwieriger zu lösen, doch zeigen die Lösungen bei Raumtemperatur eine höhere Lagerbeständigkeit; auch ist der Komplex als solcher weniger hydrolyseempfindlich. NH- und OHgruppenhaltige Beschleunigersysteme sind wegen der Bildung von chemisch relativ unstabilen Harnstoff- und Urethanstrukturen und damit wegen der zu erwartenden stärkeren Wärmealterung weniger geeignet.

Als Polymerisationsinhibitoren, die eine weitere Steigerung der Lagerfähigkeit der beanspruchten Reaktionsharzmischung bewirken, kommen übliche Polymerisationsinhibitorsysteme, wie Chinhydron, Hydrochinon, Hydrochinonmonomethyläther, Nitrobenzol, Dinitrobenzol, Dinitrochlorbenzol und andere Verbindungen, die die radikalische Polymerisation der olefinen ungesättigten Verbindung, die keine aktiven Wasserstoffatome enthält, verhindern.

Die Reaktionsharzmischungen gemäß der Erfindung können zur Herstellung von Formstoffen auch anorganische mineralische Füllstoffe enthalten. Übliche Füllstoffe sind beispielsweise Quarzmehl, Aluminiumoxyd oder Kreide.

Im folgenden sei die Erfindung noch anhand einiger Beispiele näher erläutert:

Beispiel 1:

Zunächst wurde die Lagerungsbeständigkeit einer nicht beschleunigten Reaktionsharzmischung untersucht. Die Komponenten dieser Reaktionsharzmischung waren:

100 g eines sehr reinen Isomerengemisches des Diphenylmethandiisocyanates

25 g Styrol (über Molekularsieb getrocknet) 6,6 g sehr reiner Bisphenol-A-Diglycidyläther mit einer Epoxydzahl von 0,58.

Tabelle 1, Versuch Nr. 1 zeigt den Viskositätsverlauf bei Raumtemperatur bis zu 4 Wochen.

Beispiel 2:

Zu der in Beispiel 1 genannten Mischung wurden folgende Beschleuniger- bzw. Beschleuniger-Inhibitor-Systeme gegeben: Versuch Nr. 2:
0,4 g BCl$_3$-Dimethylbenzylamin
Versuch Nr. 3:
0,4 g BCl$_3$-Dimethylbenzylamin + 0,015 g Chinhydron
Versuch Nr. 4:
0,4 g BCl$_3$-Dimethyloctylamin
Versuch Nr. 5:
0,4 g BCl$_3$-Dimethyloctylamin + 0,015 g Chinhydron
Versuch Nr. 6:
0,2 g Dimethylbenzylamin
Versuch Nr. 7:
0,3 g BF$_3$-Benzyldimethylamin

Tabelle 1:

| Vers. Nr. | Anf. Wert | Viskosität in mPas nach Lagerung bei Raumtemperatur (Meßtemperatur 23,5°C) | | | | | Gelierzeit (min) bei | |
|---|---|---|---|---|---|---|---|---|
| | | 1 Woche | 2 Wochen | 3 Wochen | 4 Wochen | 5 Wochen | 110°C | 130°C |
| 1 | 5,3 | – | – | 8,5 | 10 | – | – | – |
| 2 | 7,2 | – | – | 77,8 | 128,4 | – | 113 | 105 |
| 3 | 5,3 | – | – | 10,0 | 49,2 | – | 105 | 98 |
| 4 | 7,2 | – | – | 146 | 300 | – | 30 | 26 |
| 5 | 5,3 | – | – | 39,4 | 100 | – | 28 | 23 |
| 6 | 5,3 | nach 1 Tag geliert | – | – | – | – | 23 | – |
| 7 | 6,0 | nach ca. 2 Tagen geliert | – | – | – | – | 100 | 90 |

Der Viskositätsverlauf dieser Reaktionsharzmischungen wurde nach Lagerung in geschlossenen Gefäßen verfolgt, wobei Lagerung und Messung bei Raumtemperatur erfolgten. Aus der Tabelle 1 ergeben sich deutlich Vorteile der erfindungsgemäßen Beschleunigersysteme gegenüber den Beschleunigern in den Versuchen 6 und 7.

4

Beispiel 3:

Versuchsstäbe, bestehend aus Flachstäben aus Kupfer, umwickelt mit vier Lagen halbseitig überlappter Polyimidfolie und einer Decklage aus einem Glasgewebe, wurden bei Raumtemperatur im Vakuum mit einer Mischung gemäß Versuch 4 (Beispiel 2) getränkt. Die Viskosität der Reaktionsharzmischung betrug vor der Tränkung 7 mPas/23,5 °C. Nach beendeter Tränkung wurde die Versuchswicklung in einen Wärmeofen von 130 °C gebracht. Mit der hier beschriebenen Reaktionsharzmischung wurden zusätzlich zu den Versuchsstäben als Formstoffe drei große Normstäbe ohne Einlagen und eine Platte 200 mm x 200 mm x 3 mm gegossen.

Nach ungefähr 80 Minuten war die Reaktionsharzmischung in den Versuchsstäben und in den Formen geliert. Nach insgesamt dreistündiger Erwärmung bei 130 °C wurde die Temperatur noch 24 Stunden bei 180 °C und abschließend weitere 24 Stunden bei 200 °C gehalten. Die mechanischen und elektrischen Eigenschaftswerte der Formstoffe zeigt die Tabelle 2, die Durchtränkung der Isolierhülsen der Versuchsstäbe war gut.

Tabelle 2:

| $T_M$ (Martenstemperatur) | 220°C |
|---|---|
| Biegefestigkeit: | 150 N mm$^{-2}$ |
| Schlagbiegefestigkeit: | 11 mm N mm$^{-2}$ |
| tan bei 50 Hz = f( ): | 0,005 (100°C) |
| | 0,004 (150°C) |
| | 0,005 (200°C) |

Beispiel 4:

Ein füllstoffhaltiges Reaktionsharz der Zusammensetzung :
100 g reines Isomerengemisch des Diphenylmethandiisocyanat
25 g Bisphenol F Diglycidyläther
25 g Styrol
277 g Quarzmehl (16900)
135 g Silitin
0,925 g BCl$_3$ Dimethylbenzylamin
hat bei 50 °C folgenden Viskositätsanstieg:

| Anfangswert | nach 5 h | nach 10 h | nach 30 h | |
|---|---|---|---|---|
| 1290 | 1420 | 1620 | 3200 | mPas |

Es wird für die Herstellung von Formstoffen folgender Härtung unterworfen:
8 Stunden bei 80 °C
6 Stunden bei 150 °C
16 Stunden bei 200 °C
Die Formstoffe weisen folgende mechanischen Eigenschaften auf:

| Biegefestigkeit | 115 ± 15 N mm$^{-2}$ |
|---|---|
| Schlagbiegefestigkeit | 9 ± mm N mm$^{-2}$ |
| Martenstemperatur $T_M$ | > 220°C |

Beispiel 5:

Ein füllstofffreies Reaktionsharz der Zusammensetzung:
100 g Isomerengemisch des Diphenylmethandiisocyanat
25 g Bisphenol F Diglycidyläther
25 g Styrol
0,925 g BCl$_3$ Dimethylbenzylamin
hat folgenden Viskositätsanstieg bei Raumtemperatur (25 °C):

|  | Ausgangs-<br>wert | nach<br>1 Woche | nach<br>2 Wochen |
|---|---|---|---|
| mPas: | 11,7 | 14,2 | 25,6 |

Es wird für die Herstellung von Formstoffen folgende Härtung vorgenommen:
8 Stunden bei  80 °C
6 Stunden bei 150 °C
16 Stunden bei 200 °C
Die Formstoffe weisen folgende Eigenschaften auf:

| $T_M$ (Martenstemperatur) | 177°C |
|---|---|
| Biegefestigkeit | 149 N mm$^{-2}$ |
| Schlagbiegefestigkeit | 11 mm N mm$^{-2}$ |

## Patentansprüche

1. Heißhärtende Reaktionsharzmischung zur Imprägnierung von Isolierungen elektrischer Geräte, gebildet von aus folien- oder bandförmigen Isoliermaterialien hergestellten Isolierhülsen elektrischer Leiter, insbesondere von Wicklungsstäben oder Spulen elektrischer Maschinen, und zur Herstellung von Formstoffen mit oder ohne Einlagen, bestehend aus Polyisocyanaten und (Poly)Epoxidharzen, denen man mindestens eine olefinisch ungesättigte Verbindung, die keine aktiven Wasserstoffatome enthält und zwar Styrol oder $C_1$–$C_4$ Alkylstyrole oder (Meth)Acrylsäure $C_1$–$C_8$ Alkylester oder Diallylphthalat oder Di-(Meth)Acrylsäureester oder Gemische dieser Verbindungen zugibt und die ein Beschleunigersystem (Katalysator) enthalten, dadurch gekennzeichnet, daß als Beschleunigersystem (Katalysator) Additionskomplexe von tertiären Aminen und Bortrichlorid der allgemeinen Formel $BCl_3 \cdot NR_1R_2R_3$ zur Verwendung kommen, wobei $R_1$, $R_2$ und $R_3$ gleiche oder verschiedene aliphatische, aromatische, heterocyclische oder arylaliphatische Reste bedeuten und diese Reste oder zwei davon außer an das tertiäre Aminstickstoffatom auch aneinandergebunden sein können; weiterhin kann das tertiäre Stickstoffatom in ein Ringsystem eingebaut sein, welches auch Mehrfachbildungen enthalten und einen aromatischen Charakter haben kann, wobei dann $R_1$, $R_2$, $R_3$ für einen dreiwertigen organischen Rest steht, der über eine C-Einfach- und eine C-Doppelbindung mit dem Stickstoff verbunden ist.

2. Heißhärtende Reaktionsharzmischungen nach Anspruch 1, dadurch gekennzeichnet, daß in der Mischung außer dem Beschleuniger auch Polymerisationsinhibitoren in einer Konzentration von 0,0001 bis 2 Gewichtsprozent, bezogen auf die Gesamtmischung, enthalten sind, vorzugsweise 0,01 bis 0,5 Gewichtsprozente.

3. Heißhärtende Reaktionsharzmischung nach Anspruch 1, dadurch gekennzeichnet, daß als Beschleuniger Additionskomplexe des Bortrichlorids mit Dimethyloctylamin verwendet werden.

4. Heißhärtende Reaktionsharzmischung nach Anspruch 1, dadurch gekennzeichnet, daß als Beschleuniger Additionskomplexe des Bortrichlorids mit Dimethylbenzylamin verwendet werden.

5. Heißhärtende Reaktionsharzmischung nach Anspruch 1, dadurch gekennzeichnet, daß als Polymerisationsinhibitor Chinhydron verwendet wird.

## Claims

1. Heat-hardening reaction resin mixture for impregnating insulations of electrical devices, formed from insulating sleeves of electrical conductors, which are produced from foil- or band-like insulating materials, more particularly winding bars or coils of electrical machines and for producing moulded materials with or without inserts, consisting of polyisocyanates and (poly)epoxy resins, to which there is added at least one olefinically unsaturated compound, which contains no active hydrogen atoms, that is, styrene or $C_1$–$C_4$ alkyl styrenes or (meth)acrylic acid $C_1$-$C_8$ alkyl ester or diallyl phthalate or di-(meth)acrylic acid ester or mixtures of these compounds, and which contain an accelerator system (catalyst), characterised in that addition complexes of tertiary amines and boron trichloride with the general formula $BCl_3 \cdot NR_1R_2R_3$ are used as accelerator systems (catalyst), wherein $R_1$, $R_2$ and $R_3$ stand for the same or different aliphatic, aromatic, heterocyclic or arylaliphatic radicals and these radicals or two of them can be bonded together in addition to be being bonded to the tertiary amino nitrogen atom; furthermore, the tertiary nitrogen atom can be incorporated into a cyclic system which can also contain multiple bonds and can have an aromatic nature, in which case $R_1$, $R_2$, $R_3$ then stands for a trivalent organic radical which is bonded to the nitrogen via a C single bond and a C double bond.

2. Heat-hardening reaction resin mixture according to claim 1, characterised in that polymerization inhibitors in a concentration of 0.0001 to 2% by weight, relative to the total mixture, preferably 0.01 to 0.5% by weight, are also contained in the mixture in addition to the accelerator.

3. Heat-hardening reaction resin mixture according to claim 1, characterised in that addition complexes of boron trichloride with dimethyloctylamine are used as accelerators.

4. Heat-hardening reaction resin mixture according to claim 1, characterised in that addition complexes of boron trichloride with dimethylbenzylamine are used as accelerators.

5. Heat-hardening reaction resin mixture according to claim 1, characterised in that quinhydrone is used as a polymerization inhibitor.

**Revendications**

1. Mélange thermodurcissable de résines de réaction destiné à l'imprégnation d'isolations d'appareils électriques formées de douilles isolantes de conducteurs électriques, notamment de barres d'enroulement ou de bobines de machines électriques, fabriquées en un matériau isolant sous forme de feuilles ou sous forme de rubans, et destinées à la fabrication de demi-produits moulés, avec ou sans pièces d'insertion, constitué de polyisocyanates et de résines de polyépoxydes, auxquels on ajoute au moins un composé à insaturation oléfinique qui ne contient pas d'atome d'hydrogène actif et notamment du styrène ou des alcoylstyrènes ayant de 1 à 4 atomes de carbone dans la partie alcoyle, ou des acrylates ou des méthacrylates d'alcoyle ayant de 1 à 8 atomes de carbone dans la partie alcoyle, ou du phtalate de diallyle, ou un diacrylate ou un diméthacrylate, ou des mélanges de ces composés, et qui contiennent un système d'accélérateur (catalyseur), caractérisé en ce que, comme système d'accélérateur (catalyseur), sont utilisés des complexes d'addition d'amines tertiaires et de trichlorure de bore de formule générale $BCl_3 \cdot NR_1R_2R_3$, dans laquelle $R_1$, $R_2$ et $R_3$ représentent des radicaux identiques ou différents, aliphatiques, aromatiques, hétérocycliques ou araliphatiques, ces radicaux ou deux d'entre eux pouvant aussi être reliés l'un à l'autre, outre qu'ils sont reliés à l'atome d'azote de l'amine tertiaire; l'atome d'azote tertiaire pouvant être en outre incorporé dans un système cyclique qui peut contenir aussi des liaisons multiples et avoir un caractère aromatique, $R_1$, $R_2$ et $R_3$ représentant alors un radical organique trivalent qui est relié à l'atome d'azote par une liaison simple sur un carbone et par une liaison double sur un carbone.

2. Mélange thermodurcissable de résines de réaction suivant la revendication 1, caractérisée en ce que dans le mélange sont contenus, outre l'accélérateur, des inhibiteurs de polymérisation en une concentration de 0,0001 à 2% en poids rapportée à la composition totale et, de préférence, en une concentration de 0,01 à 0,5% en poids.

3. Mélange thermodurcissable de résines de réaction suivant la revendication 1, caractérisée en ce que des complexes d'addition du trichlorure de bore et de la diméthyloctylamine sont utilisés comme accélérateurs.

4. Mélange thermodurcissable de résines de réaction suivant la revendication 1, caractérisée en ce que des complexes d'addition du trichlorure de bore et de la diméthylbenzylamine sont utilisés comme accélérateurs.

5. Mélanges thermodurcissable de résines de réaction suivant la revendication 1, caractérisée en ce que de la quinhydrone est utilisée comme inhibiteur de polymérisation.